# EUROPEAN PATENT SPECIFICATION

(11) **EP 0 883 487 B1**
(45) Date of publication and mention of the grant of the patent: **30.10.2002**
(21) Application number: 97907504.1
(22) Date of filing: 25.02.1997
(51) Int. Cl.: B32B 27/04, B32B 29/00, B32B 31/22, B44C 5/04

(54) **A PROCESS FOR SURFACE STRUCTURING**
VERFAHREN ZUR OBERFLÄCHENSTRUKTURIERUNG
PROCEDE DE STRUCTURATION DE SURFACE

(30) Priority: 28.02.1996 SE 9600762
(43) Date of publication of application: 16.12.1998
(73) Proprietor: PERSTORP AB, 284 80 Perstorp (SE)
(72) Inventor: GIERTZ, Thomas, S-310 21 Hishult (SE); LINDGREN, Kent, S-284 32 Perstorp (SE); NILSSON, Nils-Joel, S-281 43 Hässleholm (SE)
(74) Representative: HOFFMANN - EITLE
(86) International application number: SE9700311
(87) International publication number: WO97031776

(56) References cited:
- US-A- 3 373 068
- US-A- 3 648 358
- US-A- 3 654 044
- US-A- 3 698 978

## Description

The present invention relates to a process for the manufacture of a decorative thermosetting laminate with a surface structure that realistically matches the decor of the upper surface

Products coated with thermosetting laminates are frequent today. They are foremost used when the demand for abrasion resistance is high, but also where resistance towards different chemicals and moisture is demanded. As an example of such products floors, floor beadings, table tops, work tops and wall panels can be mentioned

The thermosetting laminate mostly consists of a number of base sheets with a decor sheet placed closest to the surface The decor sheet can be provided with a desired decor or pattern Frequently used patterns usually represent the image of different kinds of wood or minerals such as marble or granite. The surface of the laminate can, at the laminating procedure, be provided with a structure, which will make the decor more realistic. Press plates with structure or structure foils are here frequently used during the pressing of the laminate. A negative reproduction of the structure in the press plate or the foil will be imprinted into the laminate during the laminating procedure.

The structure suitably represents features characteristic for the pattern the decor represents in the laminate. The structure can be made coarse to simulate for example rough planed stone, or smooth with randomly placed pits and micro cracks to simulate polished marble. When the surface of wood is simulated the surface is provided with randomly placed thin oblong indentations which imitate pores. These indentations must be oriented in the direction of the growth of the simulated wood, which is indicated by the pattern of the graining, in order to make the result realistic. Therefore the graining and also the simulated pores are oriented only in the longitudinal direction of the laminate. Since thermosetting laminates are often used on large surfaces for example floors it is essential that the pattern doesn't repeat itself. This is achieved by making a random pattern in the floor or by repeating the pattern with a low repetition frequency.

It has for a long time been a great need to be able to manufacture a decorative thermosetting laminate with a decor pattern for example with decor sections directed in different directions with a matching surface structure Such a pattern simulates for example boards or bars placed in different directions Since it has been impossible to provide these patterns with a matching surface structure these patterns have been avoided or provided with a smooth surface.

According to the present invention the above mentioned needs have been met and a thermosetting laminate with a decorative surface with a matching surface structure has been achieved. The invention relates to a process for the manufacture of a decorative thermosetting laminate, which laminate comprises thermosetting resin impregnated paper layers. A decor paper in the form of a web or a sheet, provided with a decor pattern including pattern sections with different directions and impregnated a with thermosetting resin, preferably melamine-formaldehyde resin which has then been dried, is placed as a surface layer on a base layer and bonded thereto by pressing under elevated pressure in a continuous press. The invention is characterised in that two or more matrixes, provided surface-structure, which each forms a surface structure section are used. The surface structure sections are, regarding surface structure, independent of each other, and are intended to at least mainly, but preferably completely coincide with corresponding decor pattern sections of the decor paper. The matrixes are accurately positioned on top of the decorative side of the laminate after the pressing. The laminate will hereby get a decor surface with a surface structure the different directions of which correspond with the directions of the different decor sections of the decor pattern.

According to one embodiment of the invention the base layer consists of a number of conventional dry base layer paper webs, or base layer paper sheets, impregnated with thermosetting resin. The resin in the uppermost of these is possibly melamine-formaldehyde resin. The rest of the webs or sheets preferably contain phenol-formaldehyde resin The decor paper web or decor paper sheet, is placed on top of the conventional base layer webs or base layer sheets. The different paper webs or a stack of sheets are then continuously laminated together at an elevated pressure and an elevated temperature. The pressure in the press is suitably 5 - 80 Bar, preferably 20 - 70 Bar, and the temperature is 140 - 200°C, preferably 150 - 180°C.
At the drying of the resin impregnated paper webs the solvent is evaporated and the resin is partially cured to a so-called B-stage. The resin impregnated paper obtained is usually called pre-preg.

According to another embodiment of the invention the base layer consists of a particle board or a fibre board. Hereby for example a table top or a laminate floor can be produced at the same time as the lamination of the thermosetting laminate, wherein an extra stage in the manufacturing can be avoided.

Preferably one or more matrixes constitutes the structure pattern surface on one or more rollers, with counterstays. The laminate taken out from the continuous press will pass between the rollers and the counterstays with the decor side towards the rollers at a continuous or a discontinuous pressure between the rollers and the counterstay. Hereby a three-dimensional structure which completely or partly coincides with the pattern of the decor can be achieved. Rollers having two or more matrixes suitably have a circumference which is adapted to the repetition distance of the direction variations in the decor pattern.

The decor paper web or decor paper sheets respectively are preferably provided with positioning means such as colour dots, holes, code lines, indentations or the like. The positioning means are placed in a predetermined relation to the direction variations of the decor pattern. The positioning means are used for guiding the position of the roller or rollers via a sensor such as a scanner, photocell, pneumatic sensor, mechanical sensor or the like, so that the surface structure of these are accurately positioned on the respective pattern section
A tolerance area is suitably used on the matrix in the demarcation between two adjacent, of each other independent, surface structure sections. The tolerance area consists of a 1 - 20 mm wide, preferably 3 - 10 mm wide, field without structure. According to another embodiment a tolerance area is used on the matrix in the demarcation between two adjacent, of each other independent, surface structure sections. This tolerance area consists of a 1 - 20 mm wide, preferably 3 - 10 mm wide, field were the first structure is gradually transformed into the other surface structure.

The lamination preferably takes place in continuous laminate press with two continuous steel belts wherein the surface structure is pressed in to the surface of the laminate by means of one or more rollers provided with a surface structure and placed after the laminate press.

According to one embodiment also particularly characteristic pattern passages are provided with a suitable structure. The particularly characteristic pattern passages are for example, dividing lines between plates, bars, boards, blocks or the like, but also twigs, twig holes, cracks or the like which are visually simulated in the decor of the decor paper. These are stored as information which guides an engraving tool or a pressing tool of a robot which provides the surface of the laminate with a suitable surface structure in the said particularly characteristic pattern passages. The engraving tool or the pressing tool of the robot are synchronised via the positioning means in the decor paper.

The velocity of the rollers and/or the velocity of the continuous laminate press, and thereby the velocity of the decor paper web is suitably continuously guided. This is achieved by means of sensors such as mechanical sensors, scanners, photocells, ccd cameras, pneumatic sensors or the like. These sensors will be utilised for detection of the positioning means so that an accurate match between decor and surface structure is received.

The surface layer of the laminate suitably includes a so called overlay paper, preferably of alfa-cellulose, placed on top of the decor paper. The useful life of the laminate is hereby extended since the overlay has to be worn down before a visible wear of the decor sheet will take place. The overlay paper is suitably impregnated with melamine-formaldehyde resin. At least one of the thermosetting resin impregnated sheets, preferably the uppermost is preferably coated with hard particles for example of silica, aluminium oxide and/or silicon carbide with an average size of 1 - 100 µm, preferably about 5 - 60 µm. The wear resistance is hereby increased further.

The decor pattern can, for example, consist of a number of sections of parallel rows of bars, where the bars in adjoining rows are preferably mutually offset in the longitudinal direction. One section of bars is thereby arranged parallel to the longitudinal direction of the laminate and followed by a section of bars arranged perpendicularly to the previous section of bars and so on

A tolerance area is suitably used on the matrix in the demarcation between two adjacent, of each other independent, surface structure sections. The tolerance area consists of a 1 - 20 mm wide, preferably 3 - 10 mm wide, field without structure.
According to another embodiment a tolerance area is used on the matrix in the demarcation between two adjacent, of each other independent, surface structure sections. The tolerance area consists of a 1 - 20 mm wide, preferably 3 - 10 mm wide, field were the first structure is gradually transformed into the other surface structure.

The invention is further explained together with the enclosed drawings showing different embodiments of the invention where,
- Figure 1 schematically shows a continuous laminating procedure according to the invention where the laminate after the pressing is provided with a surface structure.
- Figure 2 schematically shows how a continuously manufactured laminate which has just left the laminate press is provided with a surface structure, according to the invention.
- Figure 3 schematically shows, according to a second embodiment of the invention, how a continuously manufactured laminate which has just left the laminate press, is provided with a surface structure.

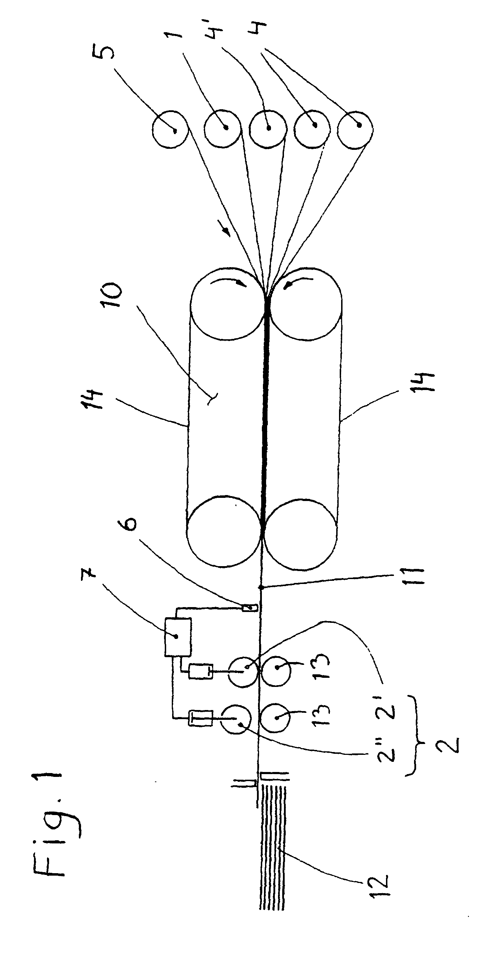

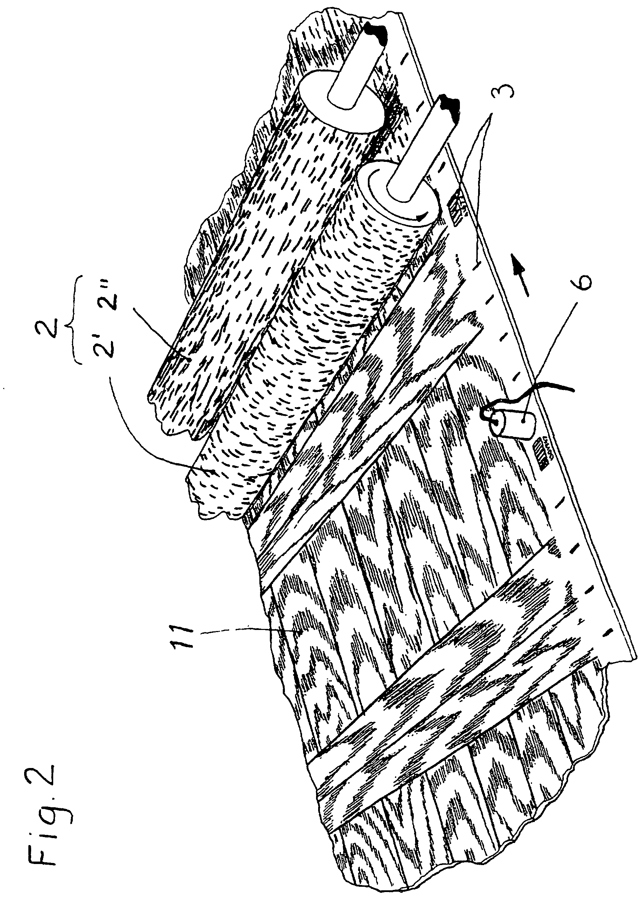

Figure 1 shows one embodiment of the invention, wherein a number of different paper webs are laminated together in a continuous laminate press 10 provided with two continuous steel belts 14. The webs consist from below to top of:
a) a number of base paper webs 4 which are impregnated with phenol-formaldehyde resin,
b) one base paper web 4' which is impregnated with melamine-formaldehyde resin,
c) one decor paper web 1 containing pattern sections with different directions which web is impregnated with melamine-formaldehyde resin,
d) one overlay paper web 5 of alfa-cellulose impregnated with melamine-formaldehyde resin. The different webs are continuously fed in between the press belts 14 of the press 10, where they at a pressure of 40 Bar and a temperature of 175°C are laminated together whereby the laminate starts to cure. When the laminate has passed the press bands 14, two rollers 2' and 2" respectively, which are provided with of each other independent surface structure, are alternately pressed towards the decor side of the laminate while the laminate passes between these rollers 2 and their counterstay rollers 13. The laminate is not fully cured at this stage. The rollers 2' and 2" are guided by means of a sensor 6 which detects positioning means 3 (fig. 2) in the form of code lines placed on one edge of the decor paper web, so that the respective surface structure is pressed towards a corresponding pattern section of the decor web. The laminate 11 is thereafter cut into laminate sheets 12. The curing process will continue due to the contained heat in the laminate so that this becomes fully cured. The structure rollers 2' and 2" and/or the counterstay rollers 13 can if required be heated whereby the curing can be controlled. The counterstay rollers which suitably are made of metal can also be coated with a softer material such as a one or a few millimetres thick replaceable paper layer. The coating material can also be composed of a few millimetres thick rubber layer with a hardness of 30 Shore A-50 Shore D depending on the compactness and depth of the surface structure. The surface structuring is hereby facilitated, especially when the surface structure is deep.

The rollers 2 and/or the counterstay rollers 13 can also be provided with pressure sensitive sensors, suitably of piezo-electric type so that the pressure between the rollers 2 and the counterstay rollers 13 can be guided accurately. The pressure sensitive sensors can suitably also be combined with a thickness measuring by detecting the distance between a roller 2 and a counterstay roller 13. Hereby the degree of curing of the laminate at the position of the rollers 2 can continuously be monitored by establishing the correlation between the depth of the structure impression and the applied force. By guiding the velocity of the press belts 14 or the temperature in the press, the degree of curing at the position of the structure rollers 2 can be adjusted. Hereby the type of micro cracks which will appear in the surface of the laminate when you try to press a surface structure into a laminate with to high a degree of curing can be avoided.

The laminate can further, after it has been provided with surface structure, be heated for example by means of infrared radiators, or hot air to speed up the remaining curing.

Figure 2 shows a part of a continuous laminating process according to the invention where the laminate is provided with a surface structure. The laminate 11 has just passed the press bands and is not fully cured. The decor paper web which is provided with an alternating lengthways and crossways bar pattern with wood graining, is at one edge provided with positioning means 3 in the form of code lines. The code lines 3 are detected by a sensor 6 which, via an adjustable control device 7 (fig. 1), guides the rollers 2' and 2" respectively which are provided with a surface structure. The first roller 2' which is provided with a longitudinal surface structure is pressed towards the laminate while the longitudinal decor pattern passes. The first roller 2' will then be lifted, after which the second roller 2", which is provided with a crossways surface structure, will be pressed towards the laminate while the crossways decor pattern passes. The rollers 2' and 2" will hereby alternately be pressed towards the decorative surface of the passing laminate 11 so that this surface will be provided with a surface that matches the decor. The counterstay rollers of the rollers 2', 2" are not shown in the figure. Decors with more than two directions, and other directions than lengthways and crossways can be achieved by for example using more then two rollers. The rollers can then each be provided with one or more surface structures which each corresponds to one of the pattern directions of the decor. The rollers can also be parted so that each roller only partly covers the width of the laminate.

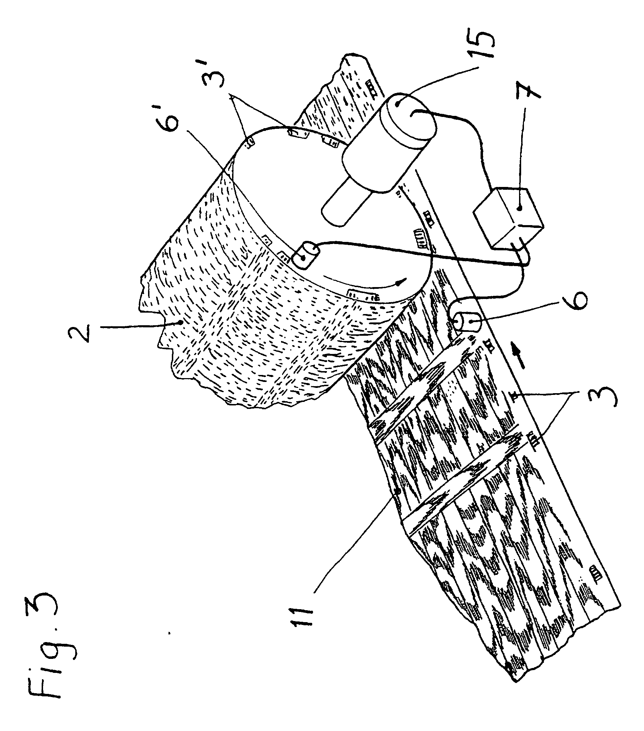

Figure 3 shows, according to a second embodiment of the invention, a part of a continuous lamination process, where the laminate is provided with a surface structure. The laminate 11 has just passed the press belts and is not fully cured. The decor paper web which is provided with an alternating lengthways and crossways bar pattern with wood graining is along one edge provided with positioning means 3 in the form of code lines. The code lines 3 are detected by a sensor 6 which via an adjustable control device 7 guides the roller 2 provided with a number of surface structured matrixes. The matrixes are each provided with a lengthways or a crossways surface structure. The surface structures and the circumference of the roller 2 respectively are adapted to the different decor sections, and the pattern repetition of the laminate 11. The roller will thereby be continuously pressed towards the surface of the laminate 11 while it passes. The positions of the different surface structure sections of the roller are detected via code lines 3' by a sensor 6'. The adjustable control device 7 guides, by comparing the signals from the two sensors 6 and 6', the velocity of the roller by means of a motor 15. The laminate 11 is hereby provided with a surface structure corresponding to the decor. The counterstay roller of the roller 2 is not shown in the figure. In some cases, as for example when the differences between the circumference of the roller 2 and the repetition distance of the pattern in the decor web has become to big to adjust while pressing, the roller 2 can be slightly lifted for a short moment. It is also possible to lower the conterstay roller 13 for a short moment. These big differences can for example be caused by the thermal expansion of the laminate. While the roller 2 is lifted, or the conterstay roller 13 lowered, the position of the roller 2 can be adjusted in respect to the pattern of the decor paper web by means of the code lines 3 and 3' respectively. This short adjustment period suitably takes place while a demarcation between two decor pattern sections with different directions pass the roller 2.

Particularly characteristic pattern passages such as twigs, dividing lines or the like can also be provided with a suitable structure by using one or more robots provided with an engraving or a pressing tool. Information regarding the surface structure and position of each pattern section is stored as, for example computer information on an optical disc. A sensor 6 which continuously reads the code lines 6, transmits the detected position code to the guiding program of the robots so that the guiding information for the intended pattern passage can be collected from the optical disc. By combining the process described in figure 1 with the above described robots a very realistic surface structure can be produced.

For example the decor web, and possibly the base layer webs and the overlay web can be cut into sheets. The sheets will then be stacked into bundles which are then one by one fed into the press. The bundles can also be supplemented with a base layer for example of particle board or fibre board, wherein for example a table top or a laminate floor can be produced in one step. When such a base layer is used, a number of impregnated sheets, so called contra layers, are placed on the backside of the body. The particle or fibre boards can one by one be fed through the press, placed close to each other, wherein decor paper, overlay, contra layer etc. can be feed into the press in the form of a web from rolls. The paper webs that are placed towards the base layer can be coated with glue. Alternatively also the body can be coated with glue. This glue coating will however in most cases not be necessary since the thermosetting resin, which the paper has been impregnated with, will be sufficient to bond the paper to the base layer.

## Claims

1. A process for the manufacture of a decorative thermosetting laminate, which laminate comprises thermosetting resin impregnated paper layers, wherein a decor paper in the form of a web or a sheet (1), provided with a decor pattern having pattern sections with different directions and impregnated with thermosetting resin, preferably melamine-formaldehyde resin which resin has then been dried, is placed as a surface layer towards a base layer and bonded thereto by pressing at an elevated pressure in a continuous laminate press, **characterised in that** two or more matrixes, provided with surface-structure, each forming a surface structure section, which sections are, regarding surface structure, independent of each other, and that said surface structure sections are intended to at least mainly, but preferably completely coincide with corresponding decor sections of the decor paper (1), are accurately positioned on top of the decorative side of the laminate after the pressing and are pressed on to this, whereby the laminate will get a decor surface with a surface structure the different directions of which correspond with the directions of the different decor sections of the decor pattern.

2. Process according to claim 1 **characterised in that** the base layer is consists of a number of conventional dry base layer paper webs (4, 4') or base layer sheets respectively, impregnated with a thermosetting resin wherein the resin in the uppermost (4') of these possibly is melamine-formaldehyde resin while the rest of the webs or sheets preferably contain phenol-formaldehyde resin, wherein the decor paper web (1) or decor paper sheet respectively, is placed on top of the conventional base layer webs (4, 4') or base layer sheets after which the different paper webs or a stack of sheets, continuously are laminated together at an elevated pressure and an elevated temperature.

3. Process according to claim 1 **characterised in that** the base layer consists of a particle board or a fibre board.

4. Process according to any of the claims 1 - 3 **characterised in that** one or more matrixes constitute the structure pattern surface on one or more rollers (2), with a counterstay (13), wherein the laminate, taken out from the continuous press, passes between the rollers (2) and the counterstay (13) with the decor side towards the rollers (2) at a continuous or discontinuous pressure between the rollers (2) and the counterstay (13).

5. Process according to claim 4 **characterised in that** rollers (2) containing two or more matrixes have a circumference adapted to the repetition distance in the direction variations of the decor pattern.

6. Process according to any of the claims 1 - 5 **characterised in that** the decor paper web (1) or the decor paper sheets are provided with positioning means (3) such as colour dots, code lines, holes, indentations or the like, and that said positioning means (3) are placed in a predetermined relation to the variations of direction in the decor pattern.

7. Process according to claim 6 **characterised in that** the positioning means (3) are used for guidance of the position of the roller or rollers (2), via a sensor (6) such as a scanner, photocell, pneumatic sensor, mechanical sensor or the like, so that the surface structure of these is accurately positioned on the respective pattern section.

8. Process according to any of the claims 1 - 7 **characterised in that** the decor pattern consists of a number of sections of parallel rows of bars, where the bars in adjoining rows are preferably mutually offset in the longitudinal direction, wherein one section of bars arranged parallel to the longitudinal direction of the laminate is followed by a section of bars arranged perpendicular to the previous section of bars.

9. Process according to any of the claims 1 - 8 **characterised in that** a tolerance area is used on the matrix in the demarcation between two adjacent, of each other independent, surface structure sections, which tolerance area consists of a 1 - 20 mm wide, preferably 3 - 10 mm wide, field without any structure.

10. Process according to any of the claims 1 - 8 **characterised in that** a tolerance area is used on the matrix in the demarcation between two adjacent, of each other independent, surface structure sections, which tolerance area consists of a 1 - 20 mm wide, preferably 3 - 10 mm wide, field were the first structure is gradually transformed into the other surface structure.

11. Process according to any of the claims 1 - 10 **characterised in that** the surface layer of the laminate includes a so-called overlay paper (5), preferably of alfa-cellulose, placed on top of the decor paper (1).

12. Process according to claim 11 **characterised in that** the overlay paper (5) is impregnated with melamine-formaldehyde resin.

13. Process according to any of the claims 4 - 12 **characterised in that** counterstays (13) are rollers and the surface structure provided rollers (2) and/or the counterstay rollers (13) are heated.

14. Process according to any of the claims 1 - 13 **characterised in that** particularly characteristic pattern sections such as dividing lines between plates, bars, boards, blocks or the like, but also twigs, twig holes, cracks or the like which are visually simulated in the decor of the decor paper (1), are stored as information, that said information is used when providing the surface of the laminate with a suitable surface structure in said particularly characteristic pattern sections, via an engraving tool or a pressing tool of a robot, and that said engraving tool or pressing tool of the robot is synchronised via the positioning means (3) in the decor paper (1).

15. Process according to any of the claims 1 - 14 **characterised in that** the pressure in the press is 5 - 80 Bar, preferably 20 - 70 Bar, and that the temperature is 140 - 200°C, preferably 150 - 180°C.

16. Process according to any of the claims 1 - 15 **characterised in that** the velocity of the rollers (2) and/or the velocity of the continuous laminate press, and thereby the velocity of the decor paper web (1) is continuously guided by means of sensors such as mechanical sensors, scanners, photocells, ccd cameras, pneumatic sensors or the like and the positioning means (6) so that an accurate match between decor and surface structure is obtained.

17. Process according to any of the claims 1 - 16 **characterised in that** at least one of the thermosetting resin impregnated sheets (1 or 5 respectively), preferably the uppermost is coated with hard particles for example silica, aluminium oxide and/or silicon carbide with an average size of 1 - 100 µm, preferably about 5-60 µm.

## Patentansprüche

1. Verfahren für die Herstellung eines dekorativen wärmeaushärtenden Laminats (21), welches Laminat (21) mit einem wärmeaushärtenden Harz imprägnierte Papierlagen aufweist, wobei ein Dekorpapier in Form einer Bahn oder eines Bogens (1), das mit einem Dekormuster mit Musterabschnitten mit unterschiedlichen Richtungen versehen ist und mit einem wärmeaushärtenden Harz, vorzugsweise Melamin-Formaldehydharz, das getrocknet worden ist, imprägniert ist, als eine Oberflächenlage auf eine Basislage gesetzt wird und an dieser durch Pressen unter erhöhtem Druck in einer kontinuierlichen Laminatpresse angehaftet wird, **dadurch gekennzeichnet, dass** zwei oder mehrere Matrizen, die mit einer Oberflächenstruktur versehen sind, die alle einen Oberflächenstrukturabschnitt bilden, wobei diese Abschnitte in bezug auf die Struktur unabhängig voneinander sind und die Oberflächenstrukturabschnitte zumindest hauptsächlich, aber vorzugsweise vollständig, mit entsprechenden Dekorabschnitten des Dekorpapiers (1, 11) übereinstimmen sollen, genau auf der Oberseite des Dekorpapiers nach dem Pressen angeordnet und auf dieses gedrückt werden, wobei das Laminat (21) eine Dekoroberfläche mit einer Oberflächenstruktur erhalten wird, deren unterschiedliche Richtungen mit den Richtungen der unterschiedlichen Dekorabschnitte des Dekormusters übereinstimmen.

2. Verfahren gemäß Anspruch 1, **dadurch gekennzeichnet, dass** die Basislage aus einer Anzahl von herkömmlichen trockenen Basislagen-Papierbahnen (4, 4') oder Basislagen-Papierbögen bestehen, die mit einem wärmeaushärtenden Harz imprägniert sind, wobei das Harz in der am weitesten oben gelegenen (4') Lage möglicherweise Melamin-Formaldehydharz ist, während der Rest der Bahnen oder Bögen vorzugsweise Phenol-Formaldehydharz enthält, wobei die Dekorpapierbahn (1) oder der Dekorpapierbogen jeweils auf die Oberseite der herkömmlichen Basispapierbahnen (4, 4') oder Basispapierbögen gesetzt wird, wonach die unterschiedlichen Papierbahnen oder ein Stapel von Bögen jeweils kontinuierlich zusammen laminiert werden bei erhöhtem Druck und einer erhöhten Temperatur.

3. Verfahren gemäß Anspruch 1, wobei die Basislage aus einer Spanplatte oder einer Faserplatte besteht.

4. Verfahren gemäß einem der Ansprüche 1 bis 3, **dadurch gekennzeichnet, dass** eine oder mehrere Matrizen die Strukturmusteroberfläche auf einer oder mehreren Walzen (2) darstellen mit einer Gegenführungswalze (13), wobei das Laminat, das aus der kontinuierlichen Presse entnommen wird, zwischen den Walzen (2) und der Gegenführungswalze (13) mit der Dekorseite der Walze (2) zugewandt bei einem kontinuierlichen oder diskontinuierlichen Druck zwischen den Walzen (2) und der Gegenführungswalze (13) hindurchtritt.

5. Verfahren gemäß Anspruch 4, **dadurch gekennzeichnet, dass** die Walzen (2) zwei oder mehrere Matrizen aufweisen mit einem Umfang, der der Wiederholungsentfernung in den Richtungsvariationen des Dekormusters angepasst ist.

6. Verfahren gemäß einem der Ansprüche 1 bis 5, **dadurch gekennzeichnet, dass** die Dekorpapierbahn (1) oder der Dekorpapierbogen Positioniereinrichtungen (3) besitzt, wie Farbpunkte, Codierlinien, Löcher, Einbuchtungen oder ähnliches, und dass die Positioniereinrichtungen (3) in einer vorbestimmten Beziehung zu den Richtungsvariationen des Dekormusters angeordnet werden.

7. Verfahren gemäß Anspruch 6, **dadurch gekennzeichnet, dass** die Positioniereinrichtungen (3) verwendet werden, um die Position der Walze oder Walzen (2) mittels eines Sensors (6), wie einem Scanner, einer Photozelle, einem pneumatischen Sensor, einem mechanischen Sensor oder ähnlichem zu steuern, so dass die Oberflächenstruktur derselben genau auf dem entsprechenden Musterabschnitt positioniert ist.

8. Verfahren gemäß einem der Ansprüche 1 bis 7, **dadurch gekennzeichnet, dass** das Dekormuster aus einer Anzahl von Abschnitten paralleler Reihen von Balken besteht, wobei die Balken in angrenzenden Reihen vorzugsweise gegenseitig in Längsrichtung versetzt sind, wobei ein Abschnitt von Balken, der parallel zur Längsrichtung des Laminats angeordnet ist, von einem Abschnitt von Balken gefolgt wird, der senkrecht zu dem vorhergehenden Abschnitt von Balken angeordnet ist.

9. Verfahren gemäß einem der Ansprüche 1 bis 8, **dadurch gekennzeichnet, dass** eine Toleranzfläche auf der Matrix in dem Trennbereich zwischen zwei benachbarten, voneinander unabhängigen Oberflächenstrukturabschnitten verwendet wird, wobei die Toleranzfläche aus einem 1 - 20 mm breiten, vorzugsweise 3 - 10 mm breiten Feld ohne jegliche Struktur besteht.

10. Verfahren gemäß einem der Ansprüche 1 bis 8, **dadurch gekennzeichnet, dass** eine Toleranzfläche auf der Matrix in dem Trenngebiet zwischen zwei benachbarten, voneinander unabhängigen Oberflächenstrukturabschnitten verwendet wird, wobei die Toleranzfläche aus einem 1 - 20 mm breiten, vorzugsweise 3 - 10 mm breiten Feld besteht, wo die erste Oberflächenstruktur nach und nach in die zweite Oberflächenstruktur übergeführt wird.

11. Verfahren gemäß einem der Ansprüche 1 bis 10, **dadurch gekennzeichnet, dass** die Oberflächenlage des Laminats ein sogenanntes Auflagepapier (5) vorzugsweise aus Alfa-Zellulose, aufweist, das auf der Oberseite des Dekorpapiers (1) angeordnet ist.

12. Verfahren gemäß Anspruch 11, **dadurch gekennzeichnet, dass** das Auflagepapier (5) mit Melamin-Formaldehydharz imprägniert wird.

13. Verfahren gemäß einem der Ansprüche 4 bis 12, **dadurch gekennzeichnet, dass** die Gegenführungen (13) Walzen sind und die mit einer Oberflächenstruktur versehenen Walzen (2) und/oder die Gegenführungswalzen (13) erhitzt werden.

14. Verfahren gemäß einem der Ansprüche 1 bis 13, **dadurch gekennzeichnet, dass** besonders charakteristische Musterabschnitte wie Trennlinien zwischen Platten, Balken, Brettern, Blöcken oder ähnlichem, aber auch Zweige, Astlöcher, Risse oder ähnliches, die visuell im Dekor des Dekorpapiers (1) simuliert werden, als Information gespeichert werden, dass die Information verwendet wird, wenn die Oberfläche des Laminats mit einer geeigneten Oberflächenstruktur in den besonders charakteristischen Musterabschnitten mittels eines Gravurwerkzeugs oder eines Presswerkzeugs eines Roboters versehen wird, und dass das Gravurwerkzeug oder Presswerkzeug des Roboters mit Hilfe der Position der Einrichtungen (3) im Dekorpapier (1) synchronisiert wird.

15. Verfahren gemäß einem der Ansprüche 1 bis 14, **dadurch gekennzeichnet, dass** der Druck in der Presse 5 - 80 bar, vorzugsweise 20 - 70 bar, und dass die Temperatur 140 - 200°C, vorzugsweise 160 bis 180°C ist.

16. Verfahren gemäß einem der Ansprüche 1 bis 15, **dadurch gekennzeichnet, dass** die Geschwindigkeit der Walzen (2) und/oder die Geschwindigkeit der kontinuierlichen Laminatpresse und somit der Dekorpapierbahn (1) kontinuierlich mit Hilfe von Sensoren geführt wird wie mechanische Transmitter, Scanner, Photozellen, CCD-Kameras, pneumatische Sensoren oder ähnliches sowie die Positioniereinrichtung (6), so dass eine genaue Übereinstimmung zwischen dem Dekor und der Oberflächenstruktur erhalten wird.

17. Verfahren gemäß einem der Ansprüche 1 bis 16, **dadurch gekennzeichnet, dass** zumindest einer der mit einem wärmeaushärtenden Harz imprägnierten Bögen, vorzugsweise der am weitesten oben gelegene, mit harten Partikeln beschichtet ist, z.B. Siliziumoxid, Aluminiumoxid und/oder Siliziumcarbid mit einer Durchschnittsgröße von 1 - 100 µm, vorzugsweise etwa 5 - 60 µm.

## Revendications

1. Procédé de fabrication de stratifiés décoratifs thermodurcissables comportant des couches de papier imprégné de résine thermodurcissable, dans lequel une bande ou feuille (1) de papier à décor, qui porte un motif décoratif présentant des sections de motif orientées dans différentes directions et qu'on a imprégnée d'une résine thermodurcissable, de préférence d'une résine mélamine-formaldéhyde, résine qu'on a ensuite fait sécher, est placée en tant que couche de surface sur une couche de base et liée à celle-ci par pressage sous haute pression dans une presse à stratifié fonctionnant en continu, ledit procédé étant **caractérisé en ce que** deux matrices ou plus, chacune dotée d'une structure de surface et formant une section de structure de surface, lesquelles sections sont, en ce qui concerne la structure de surface, indépendantes les unes des autres, et ces sections de structure de surface étant destinées à coïncider au moins en grande partie, mais de préférence parfaitement, avec les sections de motif correspondantes du papier à décor (1), sont positionnées avec précision sur la face décor du stratifié après le pressage et sont appuyées dessus, grâce à quoi le stratifié est doté d'une surface à décor présentant une structure de surface dont les différentes directions correspondent aux directions des différentes sections du motif décoratif.

2. Procédé conforme à la revendication 1, **caractérisé en ce que** la couche de base est constituée respectivement d'un certain nombre de bandes de papier (4, 4') de couche de base ou feuilles de couche de base sèches classiques, bandes ou feuilles imprégnées d'une résine thermodurcissable qui peut être, pour la bande ou feuille supérieure (4'), une résine mélamine-formaldéhyde tandis que, pour les autres bandes ou feuilles, il s'agit de préférence d'une résine phénol-formaldéhyde, la bande de papier à décor ou la feuille de papier à décor, respectivement, étant placée par-dessus les bandes (4, 4') de couche de base ou feuilles de couche de base classiques, après quoi les différentes bandes de papier ou la pile de feuilles sont stratifiées ensemble en continu sous haute pression et à haute température.

3. Procédé conforme à la revendication 1, **caractérisé en ce que** la couche de base consiste en un panneau de particules ou en un panneau de fibres.

4. Procédé conforme à l'une des revendications 1 à 3, **caractérisé en ce que** l'une ou plusieurs des matrices sont constituées par la ou les surfaces à motif de structure d'un ou de plusieurs rouleaux (2), associés à des contre-supports (13), et le stratifié sortant de la presse fonctionnant en continu passe entre les rouleaux (2) et les contre-supports (13), la face décor du stratifié tournée vers les rouleaux (2), sous une pression continue ou discontinue exercée par l'intermédiaire des rouleaux (2) et des contre-supports (13).

5. Procédé conforme à la revendication 4, **caractérisé en ce que** les rouleaux (2), portant deux matrices ou plus, ont une circonférence adaptée à la distance de répétition des changements de direction d'orientation du motif du décor.

6. Procédé conforme à l'une des revendications 1 à 5, **caractérisé en ce que** la bande (1) de papier à décor ou les feuilles de papier à décor présentent des moyens de positionnement (3), tels que points de couleur, lignes de code, trous, indentations ou similaires, et **en ce que** ces moyens de positionnement (3) sont placés de façon prédéterminée en correspondance avec les changements de direction d'orientation du motif du décor.

7. Procédé conforme à la revendication 6, **caractérisé en ce que** les moyens de positionnement (3) servent au guidage de positionnement du ou des rouleaux (2), par l'intermédiaire d'un capteur (6) tel qu'un capteur optique, une cellule photoélectrique, un capteur pneumatique, un capteur mécanique ou similaire, de manière à ce que les structures de surface de ces rouleaux soient positionnées avec précision sur les sections de motif respectives.

8. Procédé conforme à l'une des revendications 1 à 7, **caractérisé en ce que** le motif du décor est constitué d'un certain nombre de sections à rangées parallèles de traits, les traits de rangées adjacentes étant de préférence mutuellement décalés dans la direction longitudinale, et une section où les traits sont disposés dans la direction longitudinale du stratifié étant suivie d'une section où les traits sont disposés dans la direction perpendiculaire à celle des traits de la section précédente.

9. Procédé conforme à l'une des revendications 1 à 8, **caractérisé en ce que** l'on utilise une zone de tolérance sur la matrice, pour la démarcation entre deux sections de structure de surface adjacentes et indépendantes l'une de l'autre, laquelle zone de tolérance consiste en un domaine, large de 1 à 20 mm et de préférence de 3 à 10 mm, qui ne porte aucune structure de surface.

10. Procédé conforme à l'une des revendications 1 à 8, **caractérisé en ce que** l'on utilise une zone de tolérance sur la matrice, pour la démarcation entre deux sections de structure de surface adjacentes et indépendantes l'une de l'autre, laquelle zone de tolérance consiste en un domaine, large de 1 à 20 mm et de préférence de 3 à 10 mm, où l'on passe progressivement de la première structure de surface à l'autre structure de surface.

11. Procédé conforme à l'une des revendications 1 à 10, **caractérisé en ce que** la couche de surface du stratifié comporte ce qu'on appelle un papier de couverture (5), de préférence en alpha-cellulose, placé par-dessus le papier à décor (1).

12. Procédé conforme à la revendication 11, **caractérisé en ce que** le papier de couverture (5) est imprégné d'une résine mélamine-formaldéhyde.

13. Procédé conforme à l'une des revendications 4 à 12, **caractérisé en ce que** les contre-supports (13) sont des rouleaux et **en ce que** les rouleaux (2) portant une structure de surface et/ou les rouleaux de contre-support (13) sont chauffés.

14. Procédé conforme à l'une des revendications 1 à 13, **caractérisé en ce que** l'on stocke en guise d'informations des sections de motif particulièrement caractéristiques, comme des lignes de séparation entre plaques, barres, panneaux, blocs ou similaires, mais aussi des marques de brindilles, de noeuds, de fissures ou similaires, visuellement simulées dans le décor du papier à décor (1), **en ce que** l'on utilise ces informations pour donner à la surface du stratifié une structure de surface appropriée dans ces sections de motif particulièrement caractéristiques, par l'intermédiaire d'un outil de gravure ou de pressage monté sur un robot, et **en ce que** cet outil de gravure ou de pressage monté sur un robot est synchronisé par l'intermédiaire des moyens de positionnement (3) situés dans le papier à décor (1).

15. Procédé conforme à l'une des revendications 1 à 14, **caractérisé en ce que** la pression exercée par la presse vaut de 5 à 80 bars, et de préférence de 20 à 70 bars, et **en ce que** la température vaut de 140 à 200 °C, et de préférence de 150 à 180 °C.

16. Procédé conforme à l'une des revendications 1 à 15, **caractérisé en ce que** la vitesse de rotation des rouleaux (2) et/ou la vitesse du fonctionnement continu de la presse à stratifié, et donc la vitesse de déplacement de la bande (1) de papier à décor, sont régulées en continu au moyen des moyens de positionnement (3) et de capteurs comme des capteurs mécaniques, des capteurs optiques, des cellules photoélectriques, des caméras à CCD, des capteurs pneumatiques ou similaires, afin que soit obtenue une correspondance précise entre le décor et la structure de surface.

17. Procédé conforme à l'une des revendications 1 à 16, **caractérisé en ce qu'**au moins l'une des feuilles (1 ou 5, respectivement) imprégnées de résine thermodurcissable, et de préférence la feuille supérieure, est revêtue de particules dures, par exemple de particules de silice, d'oxyde d'aluminium et/ou de carbure de silicium, dont la taille moyenne vaut de 1 à 100 µm, et de préférence, à peu près de 5 à 60 µm.
